# EUROPÄISCHE PATENTANMELDUNG

(11) **EP 2 808 976 A1**
(43) Veröffentlichungstag der Anmeldung: **03.12.2014**
(21) Anmeldenummer: 13169729.4
(22) Anmeldetag: 29.05.2013
(51) Int. Cl.: H02J 7/02, B60L 11/18, H02M 7/48

(54) **Schaltungsanordnung für den Primärteil eines Systems zur kontaktlosen Energieübertragung, sowie Übertragerelement**

(71) Anmelder: Brusa Elektronik AG, 9466 Sennwald (CH)
(72) Erfinder: Krause, Axel, 9650 Nesslau (CH)
(74) Vertreter: Patentbüro Paul Rosenich AG

(57) **Zusammenfassung**

Ein Übertragerelement ist als Primärteil für ein System zur kontaktlosen Energieübertragung auf ein Sekundärteil vorgesehen. Es umfasst zumindest eine Primärspule (7) und eine Energieversorgung und Ansteuerelektronik (2 bis 15) für die Primärspule (7). Die Schaltungsanordnung für den Primärteil ist in einem gemeinsamen Gehäuse (11) untergebracht. Vorzugsweise ist auch jede Primärspule (7) im gemeinsamen Gehäuse (11) untergebracht.

## Beschreibung

Die Erfindung betrifft eine Schaltungsanordnung für den Primärteil eines Systems zur kontaktlosen Energieübertragung, nach dem Oberbegriff des Anspruchs 1, sowie ein Übertragerelement als Primärteil für ein System zur kontaktlosen Energieübertragung auf einen Sekundärteil, nach dem Oberbegriff des Anspruchs 6.

In der WO2013/017200 ist ein elektronisches Gerät offenbart, insbesondere ein Übertragerkopf zur Versorgung des Antriebs eines zumindest teilweise elektrisch betriebenen Fahrzeuges auf Basis induktiver Energieübertragung. Dieses Gerät weist ein Gehäuse mit einer darin befindlichen Sekundärwicklung und einem integrierten Gleichrichter auf.

Die Primärseite jedoch, die aus dem Stromnetz gespeist wird und die Energie für den Betrieb und/oder das Laden des Energiespeichers der Sekundärseite zur Verfügung stellt, ist typischerweise aufgrund vieler verschiedener Baugruppen als Anordnung mehrerer getrennter Einheiten aufgebaut. Die Primärseite muss neben dem Netzanschluss noch einen oder mehrere der Baugruppen Eingangsfilter, Schutzschaltung, Gleichrichter, Leistungsfaktorkorrekturfilter, Aufwärtswandler, dann typischerweise DC/DC-Abwärtswandler, resonanter DC/AC Wandler, Hochfrequenz-Leitungen sowie zumindest eine Primärspule aufweisen.

Ein typischer Aufbau sieht eine Elektronik mit Lüftern für die Wandmontage vor, von welcher Hochfrequenz-Leitungen zu weiterer Elektronik am oder im Fussboden gehen, welche dann die Primärspule des unter dem Auto am oder im Fussboden, im Boden, in einer Fahrbahn od.dgl. speist.

Im Primärteil ist auch die Regelung der zu übertragenden Energie zu verwirklichen. Dazu umfasst der Primärteil typischerweise eine Spannungsregelungsvorrichtung.

Aufgabe der vorliegenden Erfindung ist es somit, eine möglichst hohe Integration auch für den Primärteil eines Systems zur kontaktlosen Energieübertragung zu erreichen und diesen Primärteil zu diesem Zweck schaltungstechnisch und baulich zu vereinfachen. Auch die Mitnahme im Fahrzeug zur Verbindung mit üblichen Stromquellen an jedem beliebigen Ort soll damit ermöglicht werden.

Die Aufgabe wird durch die Merkmale der unabhängigen Ansprüche 1 bzw. 6 gelöst. Vorteilhafte Weiterbildungen sind in den Figuren und in den jeweils abhängigen Patentansprüchen dargelegt.

Typischerweise weist eine Schaltungsanordnung für den Primärteil eines Systems zur kontaktlosen Energieübertragung zumindest einen Netzanschluss, einen Gleichrichter, einen Aufwärtswandler, vorzugsweise mit Leistungsfaktorkorrekturfilter, einen resonanten DC/AC Wandler und Ausgänge zu zumindest einer Primärspule auf, gegebenenfalls auch ein Eingangsfilter und eine Schutzschaltung zwischen Netzanschluss und Gleichrichter.

Gemäss der Erfindung ist diese Anordnung zur Lösung der Aufgabe dadurch gekennzeichnet, dass jedem Eingang des resonanten DC/AC-Wandlers je eine ansteuerbare Schaltanordnung nachgeschaltet ist, wobei jeder Eingang des Wandlers bei durchgängig geschalteter Schaltanordnung mit einer Kapazität und einem ersten Ausgang des Wandlers verbunden ist, und wobei jeder Eingang des Wandlers bei gesperrt geschalteter Schaltanordnung mit einer Kapazität und einem zweiten Ausgang des Wandlers verbunden ist. Dieser neuartige Aufbau macht die Spannungsregelung durch beispielsweise einen DC/DC-Abwärtswandler unnötig, da die übertragene Leistung bei konstanter Spannung durch eine Veränderung der Anregung des resonanten Wandlers mittels der Schaltanordnungen geregelt werden kann.

Vorteilhafterweise kann daher der resonante DC/AC-Wandler unmittelbar dem Aufwärtswandler nachgeschaltet sein und von diesem mit Gleichspannung versorgt werden. Durch diese Einsparung einer Baugruppe ist die Voraussetzung geschaffen, dass der Grossteil der elektrischen und elektronischen Bauteile zusammen mit der oder jeder Primärspule in einem gemeinsamen Gehäuse untergebracht werden kann. Damit können auch die teuren Hochfrequenz-Leitungen zwischen Elektronik und Primärspule vermieden werden, was mehr Flexibilität und einen grösseren Installationsradius ermöglicht und die elektromagnetische Verträglichkeit verbessert.

Gemäss einer vorteilhaften Ausführungsform der Erfindung sind die Schaltanordnungen mit einer Steuerungselektronik verbunden, in welcher ein Ablauf zur Ansteuerung der Schaltanordnungen implementiert ist, um abwechselnd je eine der Schaltanordnungen durchgängig zu schalten und die jeweils andere Schaltanordnung gesperrt zu schalten. Durch diese veränderbare Anregung des resonanten Wandlers des Primärteils kann trotz konstanter anliegender Spannung mittels einer vereinfachten und baulich kleineren Schaltung die übertragene Leistung stufenweise geregelt werden.

Vorzugsweise ist dabei vorgesehen, dass in der Steuerungselektronik ein Ablauf zur Ansteuerung der Schaltanordnungen implementiert ist, der für einen Schaltzyklus nacheinander beide Schaltanordnungen durchgängig schaltet, vorzugsweise für gleiche Anteile an der Zykluszeit, insbesondere jede Schaltanordnung im Wesentlichen die halbe Zykluszeit. Vorzugsweise erfolgt die Ansteuerung der Schaltelemente so, dass sie im Nulldurchgang des Stromes ein- und ausgeschaltet werden, um die Verluste zu minimieren. Unter bestimmten Gegebenheiten ergibt sich dabei eine Umschaltfrequenz, die von der Resonanzfrequenz abweicht, was aber durchaus erwünscht ist. Diese Auslegung der Steuerungselektronik ergibt eine optimale Ausnutzung der eingespeisten Energie mit einfacher Regelungsmöglichkeit.

Eine Reduktion der Leistung auf die Hälfte lässt sich auf einfache Weise erreichen, indem durch entsprechende Ansteuerung der Schalteranordnungen ein Ausgang des Wandlers dauernd mit einem Eingang des Wandlers verbunden bleibt und nur der andere Ausgang wechselweise mit dem einen oder anderen Eingang des Wandlers verbunden wird.

Eine vorteilhafte Weiterbildung sieht vor, dass in der Steuerungselektronik ein Ablauf zur Ansteuerung der Schaltanordnungen implementiert ist, der die Zykluszeit in Abhängigkeit von der zu übertragenden Leistung in ganzzahligen Schritten verändert, und zwar so, dass der Resonanzkreis mit der Oberwelle der Umschaltfrequenz des Wandlers schwingt. Beispielsweise kann die Umschaltung mit einem Drittel oder einem Fünftel der Resonanzfrequenz erfolgen, entsprechend wird nur ein Drittel oder ein Fünftel der Frequenz übertragen und so die Leistung auf einen Drittel oder einen Fünftel des ursprünglichen Wertes reduziert.

Zur Lösung der eingangs gestellten Aufgabe ist auch ein Übertragerelement als Primärteil für ein System zur kontaktlosen Energieübertragung auf ein Sekundärteil geeignet, welches eine Schaltungsanordnung nach zumindest einem der vorhergehenden Absätze umfasst, die in einem gemeinsamen Gehäuse untergebracht ist. Dies umfasst zumindest eine Energieversorgung sowie die Ansteuerelektronik für die Primärspule.

Für eine noch grössere Integration und verbesserte Mitnahmemöglichkeit zur Verwendung des Primärteils an einem beliebigen Platz, der nur über eine Stromquelle verfügen muss, ist zusätzlich jede Primärspule im gemeinsamen Gehäuse untergebracht.

Wenn bei einer vorteilhaften Ausführungsform des Übertragerelementes zumindest ein wärmeleitendes Element, vorzugsweise Kupfer- oder Aluminiumplatten, das Gehäuse mit zumindest einem der darin angeordneten Bauteile verbindet, kann durch Kontakt des Gehäuses mit einer kühlen Fläche eine für den Ladezyklus ausreichende Kühlung des Primärteils gewährleistet werden. Die kühle Fläche kann beispielsweise der Boden unterhalb eines zu ladenden Elektrofahrzeuges sein. Um die Lokal anfallende Wärme der elektrischen und elektronischen Bauteile im Übertragerelement über die gesamte Fläche der Platten zu verteilen und so optimal an den Boden abzugeben, können die Platten mit Hohlkanälen ausgestattet sein, in denen ein Medium zum Wärmetransport zirkuliert, vorzugsweise Luft oder Wasser.

Ein vorteilhaftes Übertragerelement ist dadurch gekennzeichnet, dass die im Gehäuse angeordnet Schaltungsanordnung mit einem Anschluss für eine herkömmliche Stromversorgung versehen ist. Damit kann in einfacher Weise der Primärteil an jeder beliebigen herkömmlichen Stromquelle betrieben werden, was die höchstmögliche Flexibilität für den Betrieb des Primärteils bietet.

Als weitere alternative Ausführungsform kann ein Übertragerelement dadurch gekennzeichnet sein, dass der Innenraum des Gehäuses eine Vergussmasse aufweist, welche die darin enthaltenen Bauteile umgibt. Damit kann einerseits die Wärmeübertragung und die Spannungsfestigkeit erhöht werden, anderseits kann auch die mechanische Festigkeit und die Widerstandfähigkeit gegenüber mechanischen Beanspruchungen wesentlich verbessert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: ein elektrisches Schaltbild eines herkömmlichen Primärteils gemäss dem Stand der Technik,
- Fig. 2: ein elektrisches Schaltbild eines erfindungsgemässen Primärteils,
- Fig. 3: eine schematische Draufsicht auf eine Ausführungsform eines erfindungsgemässen Primärteils,
- Fig. 4: einen Schnitt entlang der Linie A-A der Fig. 3, und
- Fig. 5: einen Schnitt entlang der Linie B-B der Fig. 3.

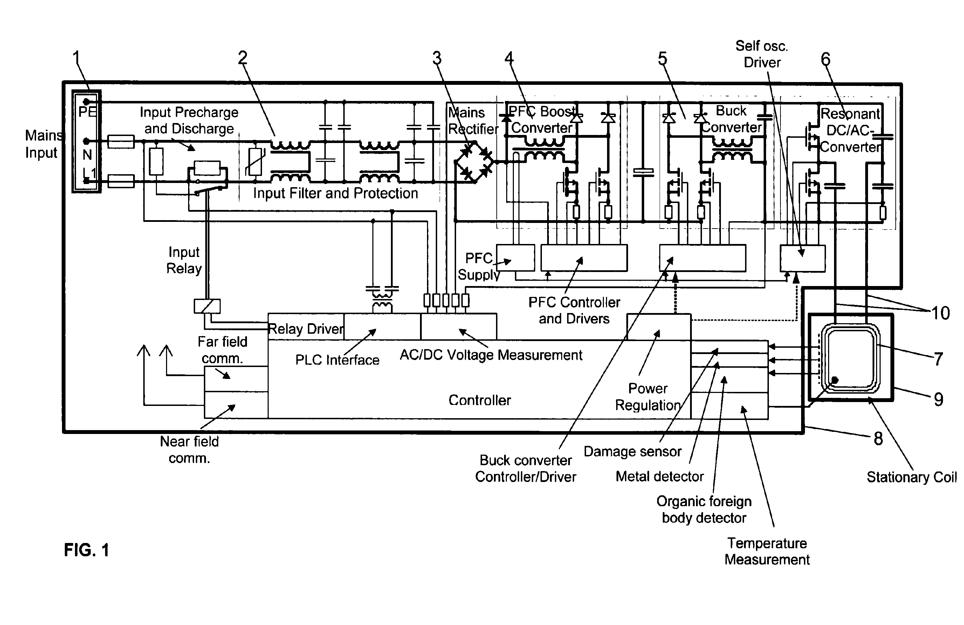

Fig. 1 zeigt die Baugruppen eines Primärteils, wie er beispielsweise in einem System zur kontaktlosen Energieübertragung Anwendung findet. Derartige Systeme kommen etwa zum kontaktlosen Laden der Traktionsbatterien von Elektrofahrzeugen zum Einsatz, wo die Energie zum Laden der Batterie durch die Primärspule des Primärteils nach dem Prinzip eines Transformators auf die Sekundärspule übertragen und dort in einen Ladestrom für die Batterie umgewandelt wird.

Der Primärteil, der auch für die Regelung der übertragenen Energie sorgen muss, umfasst typischerweise und wie in Fig. 1 erkennbar einen Netzanschluss 1, ein Eingangsfilter und eine Schutzschaltung, vorzugsweise durch eine gemeinsamen Baugruppe 2 realisiert, einen Gleichrichter 3, ein Leistungsfaktorkorrekturfilter 4, allenfalls einen Aufwärtswandler, einen DC/DC-Abwärtswandler 5, einen resonanten DC/AC- Wandler 6, und zumindest eine Primärspule 7. Herkömmliche Systeme verteilen diese Baugruppen auf mehrere, zumindest zwei, Einheiten 8, 9, die über Energie- und/oder Datenleitungen miteinander verbunden sind. Vom resonanten DC/AC-Wandler 6 zur Primärspule 7 müssen sogar teure und empfindliche Hochfrequenz-Leitungen 10 vorgesehen sein.

Die in einem ersten Gehäuse 8 zusammengefasste Einheit umfasst üblicherweise zumindest den Netzanschluss 1 und die zugehörige Elektronik 2, d.h. zumindest ein Eingangsfilter und die Schutzschaltung, sowie Lüfter. Die Einheit 8 ist meist für die Wandmontage ausgelegt.

Oftmals ist weitere Elektronik in das erste Gehäuse 8 integriert, wie etwa der Gleichrichter 3, ein Leistungsfaktorkorrekturfilter 4, wenn vorhanden der Aufwärtswandler, der DC/DC-Abwärtswandler 5 sowie der resonante DC/AC-Wandler 6.

Ein Leistungsfaktorkorrekturfilter 4 ist eine elektrische oder elektronische Schaltung, welche den sogenannten Leistungsfaktor erhöht, damit dieser in einem gesetzlich vorgegebenen Bereich bleibt.

Vom ersten Gehäuse 8 führen Hochfrequenz-Leitungen 10 zu einem zweiten Gehäuse 9, welche zumindest eine Primärspule 7 umfasst. Dieses zweite Gehäuse 9 ist typischerweise unterhalb eines zu ladenden Elektrofahrzeuges platziert, auf dem Fussboden einer Garage oder Ladestation liegend, im Boden unterhalb eines Abstellplatzes des Fahrzeuges eingelassen, od. dgl.

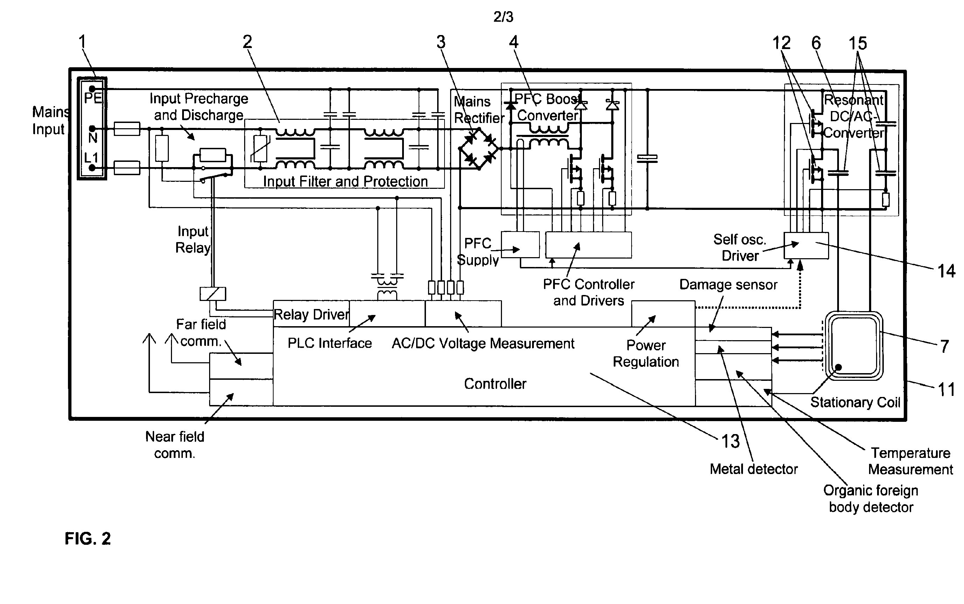

Durch die erfindungsgemässe Ausbildung der Schaltungsanordnung wie beispielsweise bei dem in Fig. 2 dargestellten Ausführungsbeispiel können bestimmte Elektronikbaugruppen entfallen und kann damit Bauraum eingespart werden. Das wiederum erlaubt die weitergehende Integration von Primärspule 7 und vorzugsweise gesamter Elektronik in einem gemeinsamen Gehäuse 11, das nur mehr zur Verbindung mit einer externen Stromquelle, beispielsweise einer herkömmlichen Steckdose, ausgelegt und ausgestattet ist.

So ist beim dargestellten Ausführungsbeispiel der Fig. 2 der DC/DC-Abwärtswandler (in Fig. 1 mit dem Bezugszeichen 5 gekennzeichnet) weggefallen, ebenso wie frei liegende teure Hochfrequenz-Leitungen (in Fig. 1 mit 10 gekennzeichnet). Neben der weitestgehenden Integration aller Bauteile des Primärteils in einem Gehäuse 11 für eine einfache und leichte Transportmöglichkeit des Primärteils ist auch die elektromagnetische Verträglichkeit durch Vermeidung langer Hochfrequenz-Leitungen verbessert.

Im Gehäuse 11 des Übertragerelementes des Primärteils kann zumindest ein wärmeleitendes Element die darin erzeugte Wärme nach aussen hin ableiten, beispielsweise an den Boden oder die umgebende Luft. Wärmeleitende Elemente können vorzugsweise Kupfer- oder Aluminiumplatten sein, die das Gehäuse 11 mit zumindest einem der darin angeordneten Bauteile verbinden. Um die lokal anfallende Wärme der elektronischen Bauteile über die gesamte Fläche der wärmeleitenden Elemente zu verteilen, sind diese vorzugsweise mit Hohlkanälen ausgestattet, in denen ein Medium zum Wärmetransport, wie etwa Luft oder Wasser, zirkuliert.

Ein erfindungsgemässes Übertragerelement kann als Primärteil eines kontaktlosen Ladesystems durch den hohen Grad der Integration auch unmittelbar an jeder beliebigen herkömmlichen Stromquelle betrieben werden. Dazu ist lediglich ein entsprechender Anschluss der im Gehäuse 11 angeordneten Schaltungsanordnung vorzusehen.

Der Innenraum des Gehäuses 11 kann mit einer Vergussmasse verfüllt sein, welche die darin enthaltenen Bauteile umgibt, um Wärmeübertragung und die Spannungsfestigkeit als auch mechanische Festigkeit und die Widerstandfähigkeit gegenüber mechanischen Beanspruchungen wesentlich zu verbessern.

Um trotz der Vereinfachung der Schaltung eine zumindest stufenweise Einstellung der vom Primärteil als magnetisches Wechselfeld abgegebenen Energie zu ermöglichen, ist jedem Eingang des resonanten DC/AC-Wandlers 6 je eine ansteuerbare Schaltanordnung 12 nachgeschaltet, die jede über eine gemeinsame Steuerungseinheit 13, gegebenenfalls unter Einbeziehung eines selbstoszillierenden Treibers 14, betätigbar ist. Dabei ist jeder Eingang des Wandlers 6 bei durchgängig geschalteter Schaltanordnung 12 mit einer Kapazität 15 und einem ersten Ausgang des Wandlers verbunden, und ist jeder Eingang des Wandlers bei gesperrt geschalteter Schaltanordnung 12 mit einer Kapazität 15 und einem zweiten Ausgang des Wandlers 6 verbunden.

Diese Kombination von Schaltungsanordnungen 12 und der Anordnung aus Steuerungseinheit 13 und Treiber 14 erlaubt eine Beeinflussung der Anregung des resonanten DC/AC-Wandlers 6, welche die übertragene Leistung bestimmt. Eine Spannungsregelung durch beispielsweise einen DC/DC-Abwärtswandler kann damit vermieden werden, so dass der resonante DC/AC-Wandler 6 unmittelbar dem Aufwärtswandler 4 nachgeschaltet sein und von diesem mit Gleichspannung versorgt werden kann.

In der Steuerungselektronik, umfassend zumindest die Steuerungseinheit 13 und den selbstoszillierenden Treiber 14, ist vorteilhafterweise ein Ablauf zur Ansteuerung der Schaltanordnungen 12 implementiert, gemäss dem abwechselnd je eine der Schaltanordnungen 12 durchgängig geschaltet und die jeweils andere Schaltanordnung 12 gesperrt geschaltet ist.

Die Steuerungseinheit 13 zusammen mit dem Treiber 14 sorgt für einen Ablauf zur Ansteuerung der Schaltanordnungen 12, bei welchem für einen Schaltzyklus nacheinander beide Schaltanordnungen 12 durchgängig geschaltet werden, vorzugsweise für gleiche Anteile an der Zykluszeit. Insbesondere wird dabei jede der beiden Schaltanordnung 12 für im Wesentlichen die halbe Zykluszeit offen bzw. geschossen geschaltet.

Vorzugsweise erfolgt die Ansteuerung der Schaltelemente der Schaltanordnungen 12 derart, dass sie im Nulldurchgang des Stromes ein- und ausgeschaltet werden, was die Verluste minimiert. Dabei kann es auch vorkommen, dass die Umschaltfrequenz, die von der Resonanzfrequenz des resonanten Wandlers 6 abweicht, was aber durchaus erwünscht ist, um trotz einfacher Regelung die eingespeiste Energie optimal auszunützen.

So kann beispielsweise eine Reduktion der Leistung auf die erreichen, indem durch entsprechende Ansteuerung der Schaltanordnungen 12 ein Ausgang des Wandlers 6 dauernd mit einem Eingang des Wandlers 6 verbunden bleibt und nur der andere Ausgang wechselweise mit dem einen oder anderen Eingang des Wandlers 6 verbunden wird.

Die Zykluszeit kann auch in Abhängigkeit von der zu übertragenden Leistung in ganzzahligen Schritten verändert werden, wobei dann der Resonanzkreis mit der Oberwelle der Umschaltfrequenz des Wandlers 6 schwingt. So kann die Umschaltung mit einem Drittel oder einem Fünftel der Resonanzfrequenz des Wandlers 6 erfolgen, und entsprechend wird nur ein Drittel oder ein Fünftel der Leistung vom Primärteil auf den Sekundärteil übertragen.

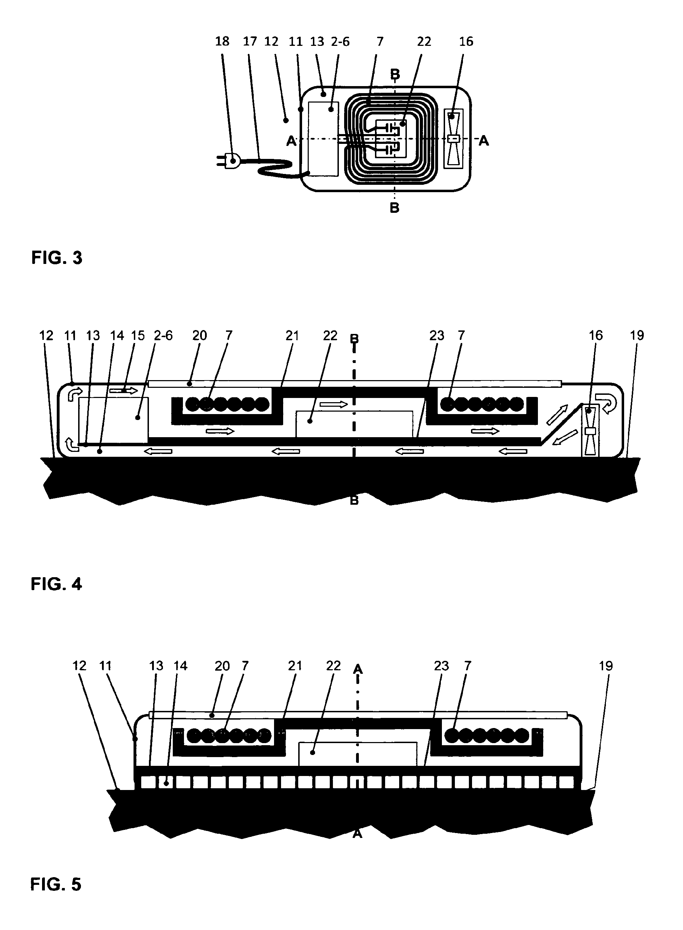

In Bezug auf die Fig. 3 bis 5 sollen nachfolgend ein vorteilhafter Aufbau sowie die Funktion eines erfindungsgemässen Primärteils in Form einer Ladeplatte für ein Elektrofahrzeug erläutert werden.

Das gemeinsame Gehäuse 11 des Primärteils ist in Form einer im Wesentlichen quaderförmigen, vorzugsweise rechteckigen und in einer Dimension gegenüber den anderen Abmessungen dünnen Platte geformt. Das Gehäuse 11 ist mit dem Fussboden 12 thermisch und vorzugsweise auch mechanisch verbunden, könnte auch in den Fussboden 12 eingelassen sein.

Das Gehäuse 11 ist allseitig geschlossen oder zumindest verschliessbar und besteht aus einem gut wärmeleitenden, vorzugsweise metallischen Material wie etwa Aluminium. Es ist mit einer im Innern angebrachten und strukturierten Metallplatte 13 versehen, in welcher Kühlkanäle 14 ausgebildet sind, in welchen ein Kühlmittel, vorzugsweise Luft, in einem geschlossenen Kreislauf - symbolisiert durch die mit 15 bezeichneten Pfeile - zirkuliert. Dieser Kreislauf 15 wird durch den Ventilator 16 unterstützt oder angetrieben.

Auf der Metallplatte 13 sind elektronische Baugruppen 2 bis 6 angeordnet, beispielsweise Gleichrichter 3, Hochsetzsteller, Leistungsfaktorkorrekturfilter 4, DC/DC-Abwärtswandler 5, Wechselrichter und resonanter DC/AC-Wandler 6, die ihre Energie über ein Netzkabel 17 mit Netzstecker 18 direkt vom Wechselstromnetz beziehen und ihre Abwärme an die Metallplatte 13 abgeben. Diese Abwärme wird von der Kühlluft im Kreislauf 15 aufgenommen und bei Durchströmung der Kühlkanäle 14 an den Boden 12 abgegeben (symbolisiert durch die Pfeile 19).

Das Gehäuse 11 hat an seiner in Gebrauchsstellung dem Sekundärteil zugewandten Seite, im dargestellten Fall eines auf dem Fussboden 12 liegenden oder daran montierten Platte oben, eine Öffnung, welche durch eine nichtmetallische Platte 20 luft- und wasserdicht abgedeckt ist. Unter dieser Platte 20 befindet sich die Anordnung zur kontaktlosen Übertragung der Energie auf den Sekundärteil, bestehend vorzugsweise aus der Primärspule 7 und vorzugsweise einem Ferritschirm 21 und einem Resonanzkondensator 22, welcher elektrisch und thermisch durch eine Isolierplatte 23 von der metallischen Platte 13 isoliert ist, um insbesondere den hohen auftretenden Resonanzspannungen gerecht zu werden und einen Rückfluss der Wärme nach oben zu verhindern. Diese Anordnung mit dem Resonanzkreis wird durch die im Gehäuse 11 zirkulierende Abluft der elektronischen Baugruppen gekühlt.

### Bezugszeichenliste

- 1: Netzanschluss
- 2: Eingangsfilter und Schutzschaltung
- 3: Gleichrichter
- 4: Leistungsfaktorkorrekturfilter
- 5: DC/DC-Abwärtswandler
- 6: Resonanter DC/AC-Wandler
- 7: Primärspule
- 8: Erstes Gehäuse
- 9: Zweites Gehäuse
- 10: Hochfrequenz-Leitungen
- 11: Gemeinsames Gehäuse des Primärteils
- 12: Schaltanordnung
- 13: Steuerungseinheit
- 14: Selbstoszillierender Treiber
- 15: Kapazität

## Patentansprüche

1. Schaltungsanordnung für den Primärteil eines Systems zur kontaktlosen Energieübertragung, umfassend zumindest einen Netzanschluss (1), einen Gleichrichter (3), einen Aufwärtswandler (4), vorzugsweise ein Leistungsfaktorkorrekturfilter, einen resonanten DC/AC Wandler (6) und Ausgänge zu zumindest einer Primärspule (7), gegebenenfalls ein Eingangsfilter und eine Schutzschaltung (2) zwischen Netzanschluss (1) und Gleichrichter (3), **dadurch gekennzeichnet, dass** jedem Eingang des resonanten DC/AC-Wandlers (6) je eine ansteuerbare Schaltanordnung (12) nachgeschaltet ist, wobei jeder Eingang des Wandlers (6) bei durchgängig geschalteter Schaltanordnung (12) mit einer Kapazität (15) und einem ersten Ausgang des Wandlers (6) verbunden ist, und wobei jeder Eingang des Wandlers (6) bei gesperrt geschalteter Schaltanordnung (12) mit einer Kapazität (15) und einem zweiten Ausgang des Wandlers (6) verbunden ist.

2. Schaltungsanordnung nach Anspruch 1, **dadurch gekennzeichnet, dass** der resonante DC/AC-Wandler (6) unmittelbar dem Aufwärtswandler (4) nachgeschaltet ist und von diesem mit Gleichspannung versorgt wird.

3. Schaltungsanordnung nach Anspruch 1 oder 2, **dadurch gekennzeichnet, dass** die Schaltanordnungen (12) mit einer Steuerungselektronik (13, 14) verbunden sind, in welcher ein Ablauf zur Ansteuerung der Schaltanordnungen (12) implementiert ist, um abwechselnd je eine der Schaltanordnungen (12) durchgängig zu schalten und die jeweils andere Schaltanordnung (12) gesperrt zu schalten.

4. Schaltungsanordnung nach Anspruch 3, **dadurch gekennzeichnet, dass** in der Steuerungselektronik (13, 14) ein Ablauf zur Ansteuerung der Schaltanordnungen (12) implementiert ist, der für einen Schaltzyklus nacheinander beide Schaltanordnungen (12) durchgängig schaltet, vorzugsweise für gleiche Anteile an der Zykluszeit, insbesondere jede Schaltanordnung (12) im Wesentlichen die halbe Zykluszeit.

5. Schaltungsanordnung nach Anspruch 4, **dadurch gekennzeichnet, dass** in der Steuerungselektronik (13, 14) ein Ablauf implementiert ist, nach dem die Ansteuerung der Schaltanordnungen (12) derart erfolgt, dass sie im Nulldurchgang des Stromes ein- und ausgeschaltet werden, gegebenenfalls mit einer von der Resonanzfrequenz abweichenden Umschaltfrequenz.

6. Schaltungsanordnung nach Anspruch 4 oder 5, **dadurch gekennzeichnet, dass** in der Steuerungselektronik (13, 14) ein Ablauf implementiert ist, der durch entsprechende Ansteuerung der Schaltanordnungen (12) einen Ausgang des Wandlers (6) dauernd mit einem Eingang des Wandlers verbunden belässt und wobei der andere Ausgang wechselweise mit dem einen oder anderen Eingang des Wandlers verbunden wird.

7. Schaltungsanordnung nach zumindest einem der Ansprüche 4 bis 6, **dadurch gekennzeichnet, dass** in der Steuerungselektronik (13,14) ein Ablauf zur Ansteuerung der Schaltanordnungen (12) implementiert ist, der die Zykluszeit in Abhängigkeit von der zu übertragenden Leistung in ganzzahligen Schritten verändert, wobei für geringere Leistung die Zykluszeit verlängert wird, wobei vorzugsweise der Resonanzkreis mit einer Oberwelle der Umschaltfrequenz des Wandlers (6) schwingt.

8. Übertragerelement als Primärteil für ein System zur kontaktlosen Energieübertragung auf ein Sekundärteil, umfassend zumindest eine Primärspule (7) und eine Energieversorgung und Ansteuerelektronik (2 bis 15) für die Primärspule (7), **dadurch gekennzeichnet, dass** eine Schaltungsanordnung nach zumindest einem der Ansprüche 1 bis 7 in einem gemeinsamen Gehäuse (11) untergebracht ist.

9. Übertragerelement nach Anspruch 8, **dadurch gekennzeichnet, dass** zusätzlich jede Primärspule (7) im gemeinsamen Gehäuse (11) untergebracht ist.

10. Übertragerelement nach Anspruch 8 oder 9, **dadurch gekennzeichnet, dass** zumindest ein wärmeleitendes Element, vorzugsweise Kupfer- oder Aluminiumplatten, das Gehäuse (11) mit zumindest einem der darin angeordneten Bauteile (2 bis 15) verbindet.

11. Übertragerelement nach Anspruch 10, **dadurch gekennzeichnet, dass** zumindest ein wärmleitendes Element mit Hohlkanälen ausgestattet ist, in denen ein Medium zum Wärmetransport zirkuliert.

12. Ubertragerelement nach zumindest einem der Ansprüche 8 bis 11,
**dadurch gekennzeichnet, dass** die im Gehäuse (11) angeordnete Schaltungsanordnung (2 bis 15) mit einem Anschluss (1) für eine herkömmliche Stromversorgung versehen ist.

13. Übertragerelement nach zumindest einem der Ansprüche 8 bis 12,
**dadurch gekennzeichnet, dass** der Innenraum des Gehäuses (11) eine Vergussmasse aufweist, welche die darin enthaltenen Bauteile (1 bis 15) umgibt.
